# EUROPÄISCHE PATENTSCHRIFT

(11) **EP 1 897 737 B1**
(45) Veröffentlichungstag und Bekanntmachung des Hinweises auf die Patenterteilung: **17.02.2010**
(21) Anmeldenummer: 07017438.8
(22) Anmeldetag: 06.09.2007
(51) Int. Cl.: B60J 7/22

(54) **Windstopeinrichtung**
Wind deflector
Déflecteur d'air

(30) Priorität: 07.09.2006 DE 102006043004
(43) Veröffentlichungstag der Anmeldung: 12.03.2008
(73) Patentinhaber: SCAMBIA Industrial Developments Aktiengesellschaft, 9494 Schaan (LI)
(72) Erfinder: Götz, Matthias, 71706 Markgröningen (DE); Riehle, Jörg, 71679 Asperg (DE); Eisenschmidt, Jens, 75181 Pforzheim (DE); Rimmelspacher, Bernhard, 76287 Rheinstetten (DE)
(74) Vertreter: Hoeger, Stellrecht & Partner Patentanwälte

(56) Entgegenhaltungen:
- EP-A- 0 361 624
- EP-A- 1 621 386
- DE-A1- 4 338 102
- DE-A1- 4 405 707
- DE-U1- 29 615 342

## Beschreibung

Die Erfindung betrifft eine Windstopeinrichtung für Kraftfahrzeuge, insbesondere für Cabriofahrzeuge, umfassend eine fahrzeugfest montierbare Windstopbasis, an welcher ein sich in einer Windschottfläche erstreckendes Windschott zwischen einer wirksamen Stellung und einer unwirksamen Stellung bewegbar gelagert ist, und eine Antriebseinrichtung zum Bewegen des Windschotts zwischen der unwirksamen und der wirksamen Stellung und umgekehrt.

Derartige Windstopeinrichtungen sind beispielsweise aus der DE 296 15 342 U1 oder der DE 43 38 102 A1 oder der EP 0 361 624 A1 oder der EP 1 621 386 A2 bekannt.

Der Erfindung liegt daher die Aufgabe zugrunde, eine Windstopeinrichtung der gattungsgemäßen Art derart zu verbessern, dass ein Betreiben derselben optimaler möglich ist.

Diese Aufgabe wird bei einer Windstopeinrichtung der eingangs beschriebenen Art erfindungsgemäß dadurch gelöst, dass der Antriebseinrichtung Energie aus einem Bordnetz des Kraftfahrzeugs mittels einer Energieübertragungseinrichtung zuführbar ist und dass die Energieübertragungseinrichtung ein erstes, an der Windstopbasis angeordnetes Element und ein zweites, an einer Seitenwand der Karosserie des Kraftfahrzeugs angeordnetes Element umfasst, die bei an dem Kraftfahrzeug in Funktionsstellung montierter Windstopeinrichtung Energie vom Bordnetz des Kraftfahrzeugs auf die an der Windstopbasis angeordnete Antriebseinrichtung übertragen, und dass das erste Element und das zweite Element in einer Fixiereinrichtung zum Festlegen der Windstopbasis an der Karosserie integriert sind.

Der Vorteil der erfindungsgemäßen Lösung ist darin zu sehen, dass die erfindungsgemäße Energieübertragungseinrichtung dann stets in der Lage ist, Energie zu übertragen, wenn die Windstopeinrichtung an dem Kraftfahrzeug in Funktionsstellung montiert ist, da in der Funktionsstellung der Windstopeinrichtung zwangsläufig das erste Element der Energieübertragungseinrichtung sowie das zweite Element der Energieübertragungseinrichtung derart positioniert sind, dass diese in der Lage sind, Energie von dem Bordnetz der Karosserie auf die Windstopbasis zu übertragen, wobei die Windstopeinrichtung mechanisch durch Verbinden der Windstopbasis mit der Karosserie des Fahrzeugs gleichzeitig fixiert werden kann und somit in diesem Fall die erfindungsgemäße Energieübertragungseinrichtung in einfacher Weise und optisch völlig unauffällig realisierbar ist.

Prinzipiell wäre es denkbar, das erste Element der Energieübertragungseinrichtung und das zweite Element der Energieübertragungseinrichtung als separate Elemente auszubilden, die einerseits an der Karosserie und andererseits an der Windstopbasis angeordnet sind.

Besonders günstig ist es, wenn das erste Element in der Windstopbasis integriert angeordnet ist, da dann ein optisches Design der Windstopbasis möglich ist, bei welcher das Vorhandensein des ersten Elements der Energieübertragungseinrichtung völlig unauffällig ist.

Noch vorteilhafter ist es, wenn das zweite Element in einer Seitenwand der Karosserie integriert angeordnet ist, da somit auch das zweite Element der Energieübertragungseinrichtung völlig unauffällig und vom Design optimiert in der Karosserie des Kraftfahrzeugs angeordnet werden kann.

Besonders günstig ist es dabei, wenn das zweite Element in einer Innenverkleidung der Seitenwand der Karosserie integriert ist.

Hinsichtlich der Übertragung der Energie mit der erfindungsgemäßen Windstopeinrichtung wurden im Zusammenhang mit der bisherigen Erläuterung der einzelnen Ausführungsbeispiele keine näheren Angaben gemacht.

So sieht ein erstes Ausführungsbeispiel vor, dass das erste und das zweite Element der Energieübertragungseinrichtung über sich berührende elektrische Kontaktflächen elektrische Energie übertragen.

Eine derartige, über sich berührende elektrische Kontaktflächen erfolgende Energieübertragung, ist eine sehr kostengünstig realisierbare Lösung.

Besonders zweckmäßig ist es hierbei, wenn das erste und das zweite Element als Steckkontaktelemente ausgebildet sind, das heißt wenn eines der Elemente ein Stecker und das andere der Elemente eine Steckeraufnahme bildet.

Alternativ zum Vorsehen von sich berührenden elektrischen Kontaktflächen zur Energieübertragung sieht ein weiteres vorteilhaftes Ausführungsbeispiel vor, dass das erste und das zweite Element der Energieübertragungseinrichtung berührungslos elektrische Energie übertragen.

Eine derartige berührungslose Übertragung von elektrischer Energie erfolgt im einfachsten Fall über elektromagnetische Induktion.

Eine derartige Lösung hat den großen Vorteil, dass damit keine elektrischen Kontakte zwischen den Elementen der Energieübertragungseinrichtung erforderlich sind und somit es lediglich erforderlich ist, dass die beiden Elemente der Energieübertragungseinrichtung in geeigneter Position relativ zueinander angeordnet werden, um die elektrische Energie von dem Bordnetz der Karosserie auf die Windstopbasis zu übertragen.

Im Rahmen der erfindungsgemäßen Lösung ist es möglich, die Bewegungen des Windschotts über eine im Kraftfahrzeug vorgesehene Steuerung zu steuern, die die Energiezufuhr zu der Antriebseinrichtung ein- und ausschalten oder auch umpolen kann. Damit ist jedoch keine Positionserfassung der jeweiligen Stellung des Windschotts möglich.

Darüber hinaus wird die eingangs genannte Aufgabe alternativ oder ergänzend zu den bislang beschriebenen Lösungen erfindungsgemäß dadurch gelöst, dass der Antriebseinrichtung eine Steuereinheit zugeordnet ist, welche die Antriebseinrichtung zum Bewegen des Windschotts zwischen der unwirksamen und der wirksamen Stellung und umgekehrt ansteuert, dass die Steuereinheit mit einer fahrzeugseitigen Funktionssteuerung kommuniziert, dass eine Signalübertragungseinheit vorgesehen ist, welche ein erstes, an der Windstopbasis angeordnetes Übertragungselement und ein zweites, an einer Seitenwand der Karosserie angeordnetes Übertragungselement umfasst, und die Übertragungselemente in einer Fixiereinrichtung zum Festlegen der Windstopbasis an der Karosserie integriert sind.

Ein Vorsehen einer derartigen Steuereinheit hat den Vorteil, dass damit Steuerungsintelligenz auf die Windstopeinrichtung verlagert werden kann und somit beispielsweise in der Windstopbasis bereits ein Abfragen von Stellungen des Windschotts relativ zur Windstopbasis, das heißt beispielsweise Neigestellungen des Windschotts relativ zur Windstopbasis, möglich ist und folglich dann entsprechend den vorhandenen Neigestellungen eine weitere Steuerung von Bewegungen des Windschotts erfolgen kann. Außerdem ist durch die einfach realisierte Kommunikation mit der fahrzeugseitigen Funktionssteuerung der Bedienungskomfort verbessert.

Unter einer fahrzeugseitigen Funktionssteuerung sind dabei Steuereinheiten des Cabriofahrzeugs zu verstehen, die einzelne Funktionen des Kraftfahrzeugs erfassen und/oder anzeigen und/oder steuern.

Beispielsweise fällt unter den Begriff "fahrzeugseitige Funktionssteuerung" eine Steuereinheit für eine Steuerung von Anzeigen am Armaturenbrett, eine Steuereinheit für ein Erfassen von Funktionstasten am Armaturenbrett, eine Steuereinheit für ein Erfassen und Steuern von Fensterpositionen und/oder eine Steuereinheit für ein Steuern eines Verdecks.

Eine derartige Steuereinheit könnte beispielsweise so ausgebildet sein, dass diese eigene, beispielsweise an der Windstopeinrichtung vorgesehene oder in Wechselwirkung mit der Steuereinheit stehende tragbare, Bedienungselemente aufweist, so dass durch Betätigen dieser Bedienungselemente die einzelnen Funktionen des Windschotts, insbesondere das Bewegen des Windschotts zwischen der wirksamen Stellung und der unwirksamen Stellung, steuerbar sind.

Diese Übertragungselemente können prinzipiell als separate Übertragungselemente vorgesehen sein.

Um ein Design einer Windstopeinrichtung optimieren zu können, ist vorzugsweise vorgesehen, dass das erste Übertragungselement in die Windstopbasis integriert ist.

Ferner lässt sich ein Design der Karosserie des Kraftfahrzeugs auch dann optimieren, wenn das zweite Übertragungselement in die Seitenwand der Karosserie integriert ist, insbesondere wenn das zweite Übertragungselement in eine Innenverkleidung der Seitenwand der Karosserie integriert ist.

Hinsichtlich der Art der Wechselwirkung der Übertragungselemente wurden bislang keine näheren Angaben gemacht. So sieht eine erste, konstruktiv einfach zu realisierende Lösung vor, dass die Übertragungselemente über sich berührende elektrische Kontaktflächen miteinander wechselwirken.

Beispielsweise wäre es dabei denkbar, die Übertragungselemente als Steckkontaktelemente auszubilden, so dass eines derselben als Stecker und das andere als Steckeraufnahme integriert ist.

Alternativ zum Vorsehen von sich berührenden elektrischen Kontaktflächen sieht eine weitere Lösung vor, dass die Übertragungselemente berührungslos miteinander wechselwirken.

Eine derartige berührungslose Wechselwirkung lässt sich beispielsweise dadurch realisieren, dass die Übertragungselemente induktiv miteinander wechselwirken.

Eine Alternative zu einer induktiven Wechselwirkung sieht vor, dass die Übertragungselemente optisch miteinander wechselwirken.

Im Falle des Vorsehens einer Steuereinheit in der Windstopeinrichtung ist es - wie bereits beschrieben - denkbar, unmittelbar an der Windstopbasis oder dem Windschott Bedienelemente vorzusehen.

Alternativ oder ergänzend zu den vorstehend beschriebenen Lösungen des Betriebs der Steuereinheit sieht eine weitere erfindungsgemäße Lösung vor, dass die Steuereinheit mit einer tragbaren Handbedienung kommuniziert.

Dabei könnten die Handbedienung und die Steuereinheit durch eine Leitung miteinander verbunden sein. Besonders vorteilhaft ist es jedoch, wenn die Handbedienung und die Steuereinheit berührungslos miteinander kommunizieren.

Alternativ zu einer direkten berührungslosen Wechselwirkung der Steuereinheit mit der Handbedienung sieht eine weitere Lösung vor, dass die Steuereinheit über die fahrzeugseitige Funktionssteuerung mit der Handbedienung kommuniziert, wobei die fahrzeugseitige Funktionssteuerung beispielsweise als Funktionssteuereinheit für eine Fahrzeugverriegelung ausgebildet sein kann.

Hierbei ist es besonders vorteilhaft, wenn die Funktionssteuerung berührungslos mit der tragbaren Handbedienung kommuniziert.

Hinsichtlich der einzelnen Funktionen, insbesondere der Korrelation der Stellung des Windschotts mit einzelnen Funktionen des Kraftfahrzeugs wurden bislang keine näheren Angaben gemacht.

So sieht eine vorteilhafte Lösung vor, dass die Funktionssteuerung über die Steuereinheit ein bewegen des Windschotts von der unwirksamen Stellung in die wirksame Stellung veranlasst, wenn das Kraftfahrzeug eine vorgebbare Geschwindigkeit überschreitet.

Alternativ oder ergänzend hierzu sieht eine weitere vorteilhafte Ausführungsform vor, dass die Funktionssteuerung über die Steuereinheit ein Bewegen des Windschotts von der unwirksamen Stellung in die wirksame Stellung veranlasst, wenn ein Verdeck des Kraftfahrzeugs geöffnet wird.

Alternativ oder ergänzend sieht eine weitere Ausführungsform vor, dass die Funktionssteuerung über die Steuereinheit ein Bewegen des Windschotts von der wirksamen in die unwirksame Stellung veranlasst, wenn ein Rückwärtsgang eingelegt wird.

Ferner sieht eine Ausführungsform alternativ oder ergänzend zu den bisherigen Funktionen vor, dass die Funktionssteuerung über die Steuereinheit ein Bewegen des Windschotts von der unwirksamen Stellung in die wirksame Stellung veranlasst, wenn alle Scheiben des Kraftfahrzeugs hochgefahren werden.

Schließlich sieht eine Ausführungsform alternativ oder ergänzend zu den bisherigen Lösungen vor, dass die Funktionssteuerung über die Steuereinheit ein Bewegen des Windschotts zwischen einer unwirksamen Stellung und einer wirksamen Stellung oder umgekehrt veranlasst, wenn eine entsprechende Bedientaste am Fahrzeug betätigt wird.

Die vorstehend genannten Funktionsmodi der Funktionssteuerung können fest vorgegeben sein.

Besonders günstig ist jedoch eine Lösung bei welcher die einzelnen Funktionsmodi - einzeln oder in Gruppen oder als Gesamtheit - aktivierbar und deaktivierbar sind.

Die eingangs genannte Aufgabe wird nicht nur durch eine Windstopeinrichtung der bislang beschriebenen Art entsprechend den einzelnen Ausführungsformen gelöst, sondern auch durch ein Cabriofahrzeug, welches mit einer oder mehreren Ausführungsformen der vorstehend beschriebenen Windstopeinrichtung versehen ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Darstellung eines ersten Ausführungsbeispiels einer erfindungsgemäßen Windstopeinrichtung, montiert an einem Kraftfahrzeug, wobei ein Windschott der Windstopeinrichtung in seiner wirksamen Stellung steht;
- Fig. 2: eine ausschnittsweise perspektivische Darstellung der Windstopeinrichtung am Cabriofahrzeug gemäß Fig. 1;
- Fig. 3: eine vergrößerte Darstellung des ersten Ausführungsbeispiels der erfindungsgemäßen Windstopeinrichtung im Bereich einer Energieübertragungseinrichtung;
- Fig. 4: eine perspektivische Darstellung eines Armaturenbretts des Cabriofahrzeugs gemäß Fig. 1 mit Steuertasten für eine Bewegung des Windschotts zwischen der wirksamen und der unwirksamen Stellung;
- Fig. 5: eine schematische Darstellung ähnlich Fig. 1 mit zusätzlicher Darstellung eines Getriebewahlhebels;
- Fig. 6: eine schematische Darstellung ähnlich Fig. 1 mit zusätzlicher Darstellung eines Betätigungselements für eine Fenstersteuerung;
- Fig. 7: eine schematische Darstellung ähnlich Fig. 1 mit einer Handbedienung zum Bewegen des Windschotts zwischen der unwirksamen und der wirksamen Stellung;
- Fig. 8: eine schematische Darstellung ähnlich Fig. 3 eines zweiten Ausführungsbeispiels einer erfindungsgemäßen Windstopeinrichtung und
- Fig. 9: eine schematische Darstellung ähnlich Fig. 2 des zweiten Ausführungsbeispiels der erfindungsgemäßen Windstopeinrichtung.

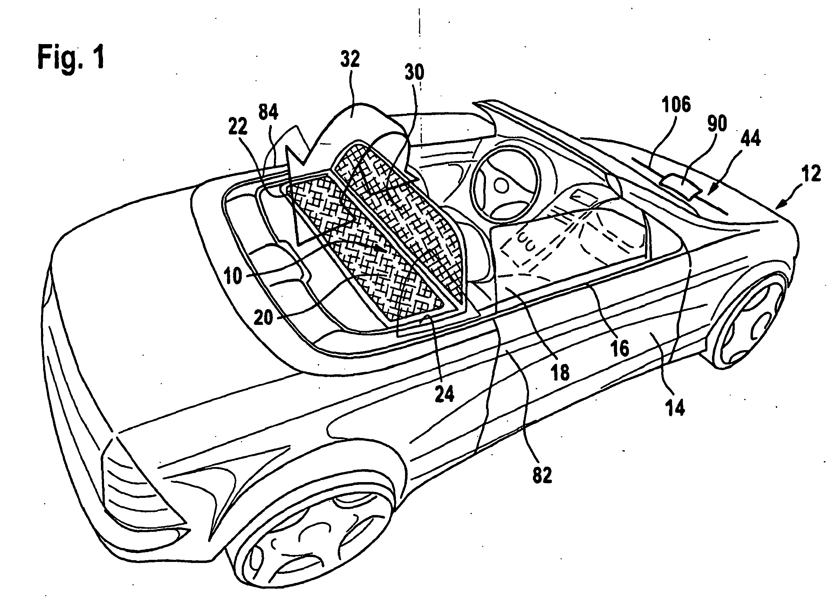

Ein erstes Ausführungsbeispiel einer erfindungsgemäßen Windstopeinrichtung 10, montiert an einer Karosserie 14 eines Cabriofahrzeugs 12, und zwar hinter einer vorderen Sitzreihe 18, umfasst eine Windstopbasis 20, welche als Abdeckung 22 für einen hinter der vorderen Sitzreihe 18 liegenden offenen Bereich 24 der Karosserie 14 dient. An der Windstopbasis 20 ist ein als Ganzes mit 30 bezeichnetes Windschott gehalten, welches relativ zur Windstopbasis 20 zwischen einer sich quer zu einer Gürtellinie 16 der Karosserie erstreckenden wirksamen Stellung und einer sich ungefähr parallel zur Gürtellinie 16 erstreckenden unwirksamen Stellung, wie durch den Pfeil 32 angedeutet, bewegbar ist (Fig. 1).

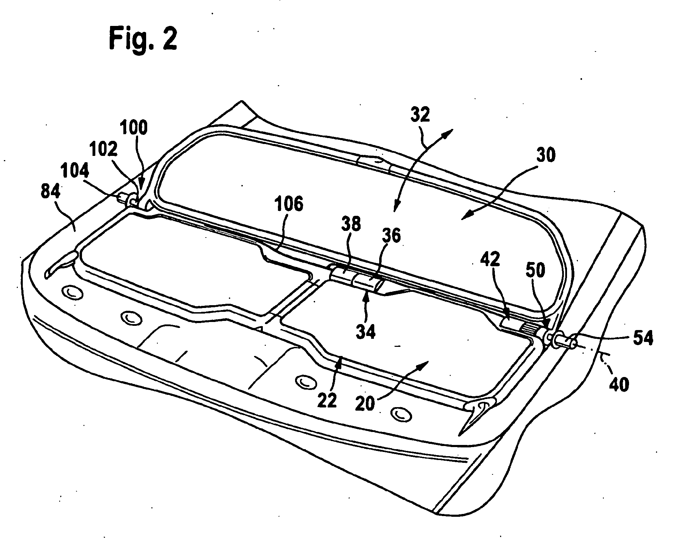

Zum Bewegen des Windschotts 30 in Richtung 32 ist die Windstopbasis 20 mit einer als Ganzes mit 34 bezeichneten Antriebseinrichtung versehen, welche vorzugsweise einen Antriebsmotor, insbesondere einen Elektromotor 36 sowie ein Getriebe 38 umfasst, mit welchen das Windschott 30 zum Ausführen einer Schwenkbewegung um eine Achse 40 antreibbar ist (Fig. 2).

Der Antriebseinrichtung 34 ist noch eine Steuereinheit 42 zugeordnet, welche einerseits eine Schwenkposition des Windschotts 30 erkennt und andererseits entsprechend einer der Steuereinheit 42 vorgegebenen gewünschten Stellung des Windschotts 30 die Antriebseinrichtung 34 ansteuert.

Um die an der Windstopbasis 20 angeordnete Antriebseinrichtung 34 sowie die Steuereinheit 42 mit Energie versorgen zu können, insbesondere mit Energie aus einem Bordnetz 44 des Kraftfahrzeugs 12, ist eine Energieübertragungseinrichtung 50 vorgesehen, welche ein an der Windstopbasis 20 angeordnetes erstes Element 52 und ein an der Karosserie 14 angeordnetes zweites Element 54 umfasst, die bei dem ersten Ausführungsbeispiel eine Energieversorgung durch einander berührende elektrische Kontakte ermöglichen.

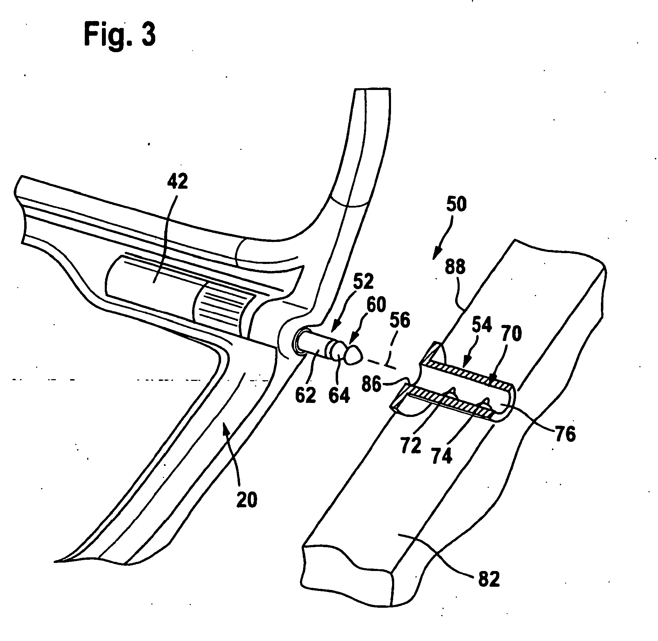

Beispielsweise ist das erste Element 52 als sich in einer Einsteckrichtung 56 erstreckender Stecker 60 ausgebildet, welcher zwei in der Einsteckrichtung aufeinanderfolgende Kontaktflächen 62 und 64 aufweist, die beispielsweise durch Mantelflächen des Steckers 60 gebildet und elektrisch gegeneinander isoliert sind (Fig. 3).

Der Stecker 60 ist in der Einsteckrichtung 56 in eine Steckeraufnahme 70 einsteckbar, welche in einem Innenraum 76 zwei Kontaktbügel 72, 74 aufweist, die bei in den Innenraum 76 eingestecktem Stecker 60 mit den Kontaktflächen 62 bzw. 64 durch Berührung einen elektrischen Kontakt ergeben.

Diese beispielsweise das zweite Element 54 bildende Steckeraufnahme 70 ist mit ihren Kontaktbügeln 72, 74 mit dem elektrischen Bordnetz 44 der Karosserie 14 verbunden und somit in der Lage, die in der Windstopbasis 20 angeordnete Antriebseinrichtung 34 sowie die Steuereinheit 42 mit Energie zu versorgen.

Da bei der erfindungsgemäßen Windstopeinrichtung die Windstopbasis 20 in Höhe der Gürtellinie 16 der Karosserie 14 zwischen Seitenwänden 82 und 84 der Karosserie angeordnet ist, ist beispielsweise die das zweite Elemente 54 darstellende Steckeraufnahme 70 in der Seitenwand 82 angeordnet, so dass deren Innenraum 76 über eine Öffnung 86 zugänglich ist, welche im Bereich einer einem Fahrgastraum der Karosserie 14 zugewandten Innenverkleidung 88 der Seitenwand 82 liegt, so dass durch diese Öffnung 86 der Stecker 60 in die Steckeraufnahme 70, die als Ganzes in der Seitenwand 82 integriert ist, einsteckbar ist.

Vorzugsweise bildet bei dem ersten Ausführungsbeispiel der Stecker 60 gleichzeitig einen Fixierbolzen, zur mechanischen Fixierung der Windstopbasis 20 relativ zu der Karosserie 14, insbesondere der Seitenwand 82 derselben, und die Steckeraufnahme 70 bildet eine mechanisch entsprechend stabile Fixieraufnahme für den Fixierbolzen.

Um die Steuereinheit 42 der Windstopbasis 20 noch mit Steuersignalen von einer Funktionssteuerung 90 des Cabriofahrzeugs 12, insbesondere einer Funktionssteuerung 90 für übliche Fahrzeugfunktionen, die auch durch mehrere Funktionssteuereinheiten gebildet sein kann, zu versorgen, ist beispielsweise, wie in Fig. 2 dargestellt, auf der der Energieübertragungseinheit 50 gegenüberliegenden Seite der Windstopeinrichtung 10 eine Signalübertragungseinheit 100 vorgesehen, welche im einfachsten Fall ebenfalls mit sich berührenden elektrischen Kontakten arbeitet.

Beispielsweise umfasst die Signalübertragungseinheit 100 ein erstes, an der Windstopbasis 20 vorgesehenes Übertragungselement 102 sowie ein zweites, in die Seitenwand 84 integriertes Übertragungselement 104, die eine Trennstelle von einer von der Funktionssteuerung 90 zu der Steuereinheit 42 geführten Steuerleitung 106 darstellen.

Vorzugsweise sind das erste Übertragungselement 102 und das zweite Übertragungselement 104 ebenfalls als Stecker bzw. Steckeraufnahme ausgebildet und ebenfalls in ein Fixierelement bzw. eine Fixieraufnahme zur mechanischen Fixierung der Windstopbasis 20 an der Karosserie 14 zwischen den Seitenwänden 82 und 84 integriert, so dass über die Fixierung der Windstopbasis 20 an der Seitenwand 84 gleichzeitig die Steuerleitung 106 zwischen der Steuereinheit 42 und der Funktionssteuerung 90 durch sich berührende Kontakte geschlossen werden kann.

Im einfachsten Fall ist das erste Übertragungselement 102 entsprechend dem Stecker 60 und das zweite Übertragungselement 104 entsprechend der Steckeraufnahme 70 ausgebildet und ausgeführt, wobei allerdings in diesem Fall der Stecker 60 relativ zur Windstopbasis 20 in Richtung der Einsteckrichtung 56 bewegbar ausgebildet ist, während der Stecker 60 der Energieübertragungseinrichtung fest mit der Windstopbasis 20 verbunden ist.

Aufgrund der Verbindung der Steuereinheit 42 mit der Funktionssteuerung 90 des Cabriofahrzeugs 12 besteht nun die Möglichkeit, die Bewegung des Windschotts 30 zwischen der unwirksamen Stellung und der wirksamen Stellung entsprechend verschiedenen Funktionszuständen des Cabriofahrzeugs 12 zu steuern.

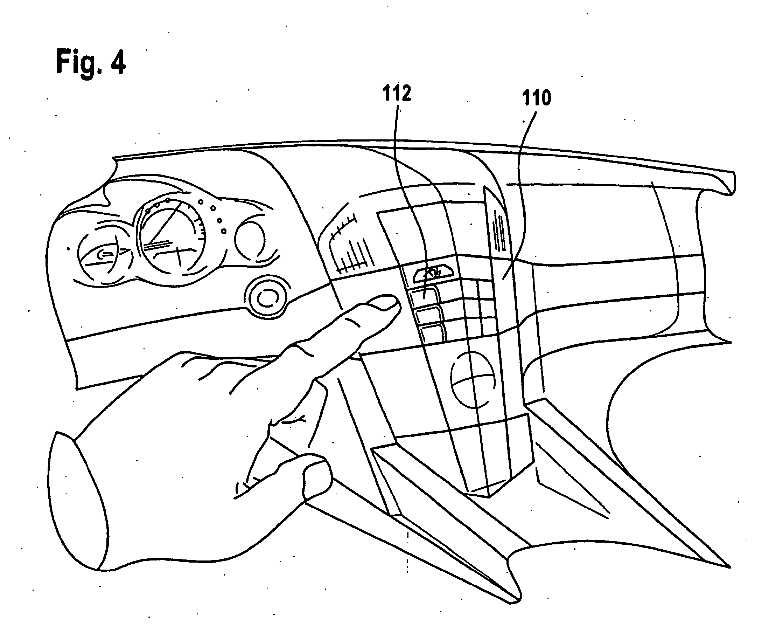

Beispielsweise besteht die Möglichkeit, wie in Fig. 4 dargestellt, an einem Armaturenbrett 110 des Cabriofahrzeugs 12 Steuertasten 112 vorzusehen, deren Betätigung durch die Funktionssteuerung 90 erkennbar und in Form eines Steuersignals der Steuereinheit 42 übermittelbar ist.

Ferner besteht die Möglichkeit, über die Funktionssteuerung 90 eine Fahrtgeschwindigkeit des Cabriofahrzeugs 12 zu erfassen, und durch die Funktionssteuerung 90 bei Überschreiten einer bestimmten vorgegebenen Geschwindigkeit der Steuereinheit 42 das Signal zu übermitteln, dass das Windschott 30 von der unwirksamen Stellung in die wirksame Stellung zu bewegen ist.

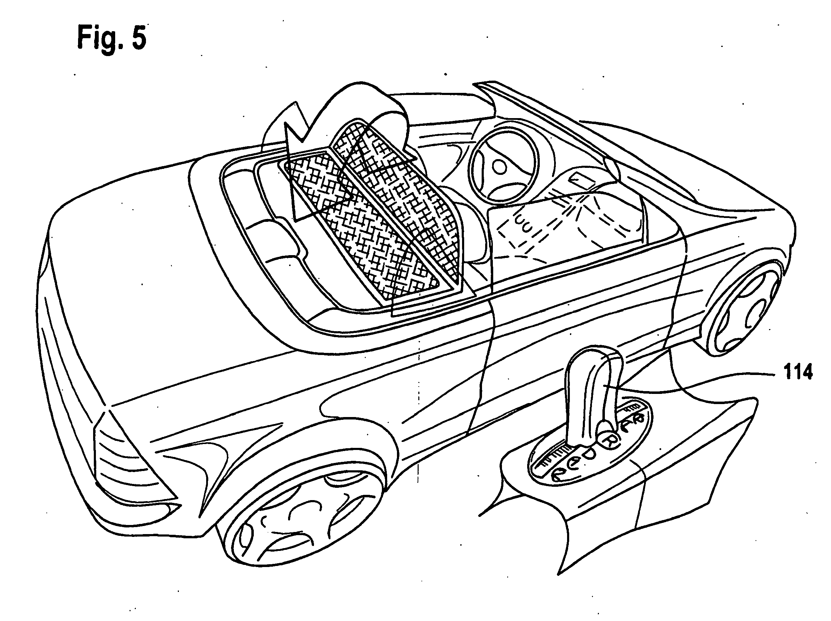

Ferner besteht, wie in Fig. 5 dargestellt, die Möglichkeit, eine Stellung eines Getriebewahlhebels 114 zu erfassen, und beispielsweise bei Einlegen eines Rückwärtsgangs mittels des Getriebewahlhebels 114 das Windschott 30 von der wirksamen Stellung in die unwirksame Stellung zu überführen, um einem Fahrer eine optimale Sicht beim Rückwärtsfahren, unbehindert durch das Windschott 30, zu gewährleisten.

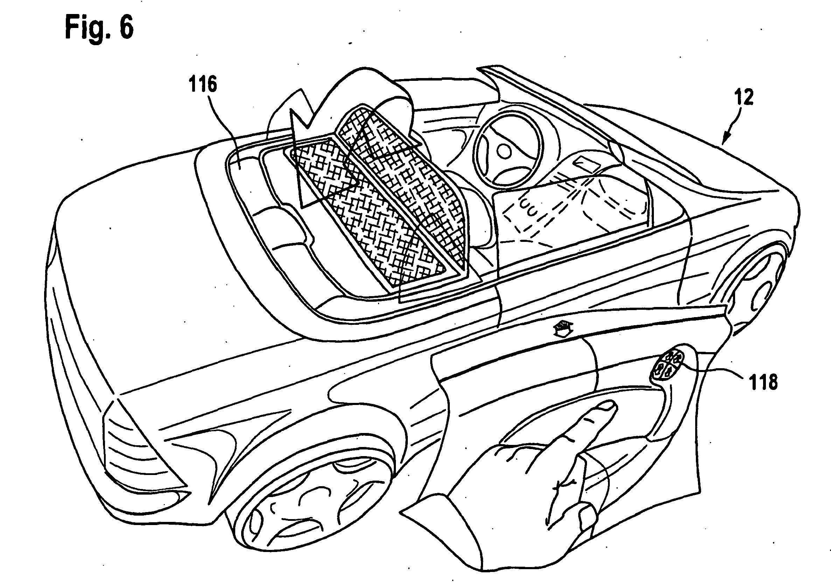

Ferner besteht, wie in Fig. 6 dargestellt, die Möglichkeit, eine Stellung eines Verdecks 116 des Cabriofahrzeugs 12 zu erfassen und entsprechend der Stellung des Verdecks 116 das Windschott 30 zu steuern, beispielsweise beim Schließen des Verdecks das Windschott 30 von der wirksamen in die unwirksame Stellung zu bewegen oder bei Öffnen des Verdecks 116, das heißt beispielsweise im vollständig geöffnetem Zustand des Verdecks 116, das Windschott 30 von der unwirksamen Stellung in die wirksame Stellung zu überführen.

Ergänzend besteht die Möglichkeit, wie ebenfalls in Fig. 6 dargestellt, Steuertasten 118 für eine Fenstersteuerung abzufragen und von der Funktionssteuerung dann, wenn beispielsweise ein Signal zum Hochfahren aller Fenster des Cabriofahrzeugs 12 gegeben wird, von der Funktionssteuerung 90 der Steuereinheit 42 den Befehl zu übermitteln, dass in diesem Fall auch das Windschott 30 von seiner unwirksamen Stellung in seine wirksame Stellung zu bewegen ist, wobei ein Hochfahren der Fenster während der Fahrt stets dann erfolgt, wenn mit höherer Geschwindigkeit gefahren wird, um Zuglufterscheinungen im Bereich der vorderen Sitzreihe 18 zu unterdrücken, so dass bei diesem Fahrzustand auch das Bewegen des Windschotts 30 von der unwirksamen Stellung in die wirksame Stellung sinnvoll ist, da diese Zuglufterscheinungen von einem sich bei der Fahrt im Bereich des Hecks bildenden Luftwirbel verhindert werden.

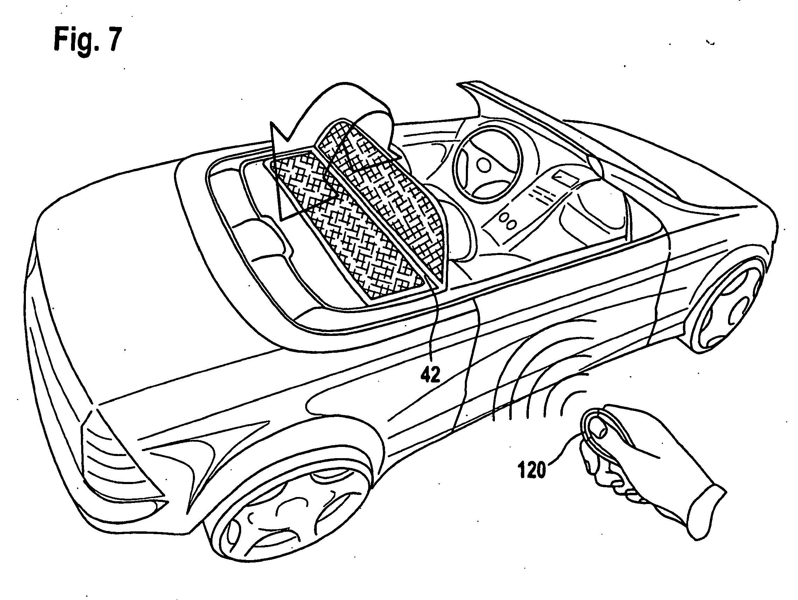

Bei dem ersten Ausführungsbeispiel ist weiterhin, wie in Fig. 7 dargestellt, vorgesehen, dass die Steuereinheit 42 mit einer tragbaren Handbedienung 120 drahtlos kommuniziert, so dass durch die Handbedienung 120 ebenfalls die Möglichkeit besteht, das Windschott 30 zwischen der wirksamen Stellung und der unwirksamen Stellung hin und her zu bewegen.

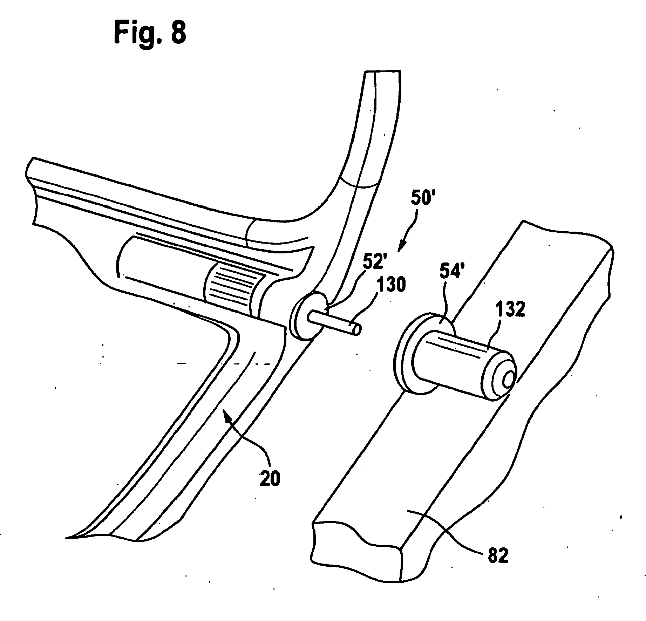

Bei einem zweiten Ausführungsbeispiel einer erfindungsgemäßen Windstopeinrichtung, dargestellt in Fig. 8, sind diejenigen Teile, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen wird.

Im Gegensatz zum ersten Ausführungsbeispiel ist allerdings die Energieübertragungseinrichtung 50' als berührungslos arbeitende Energieübertragungseinrichtung ausgebildet, wobei das erste Element 52', angeordnet an der Windstopbasis 20, und das zweite Element 54', integriert in die Seitenwand 82, berührungslos zusammenwirken.

Beispielsweise erfolgt zwischen dem zweiten Element 54' und dem ersten Element 52' eine induktive Kopplung und somit über Induktion eine Energieübertragung von dem Bordnetz 44 des Cabriofahrzeugs 12 auf die Windstopbasis 20.

Die Fixierung der Windstopbasis 20 erfolgt in konventioneller Weise über einen mechanischen Steckbolzen 130, welcher in eine Steckbolzenaufnahme 132 einsteckbar ist, wobei vorzugsweise die Elemente 52' und 54' koaxial zum Steckbolzen 130 angeordnet sein können.

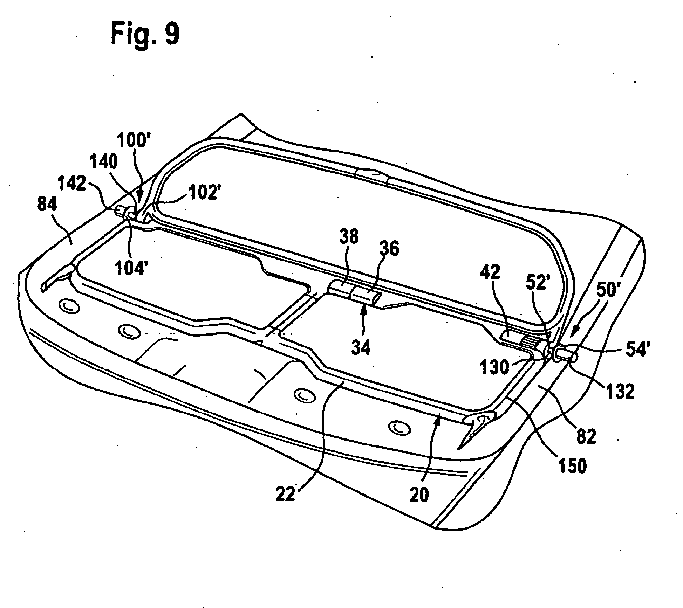

In gleicher Weise wie bei dem ersten Ausführungsbeispiel, ist die Windstopeinrichtung zusätzlich (Fig. 9) auf der gegenüberliegenden Seite der Windstopbasis 20 ebenfalls über einen Steckbolzen 140, der in eine Steckbolzenaufnahme 142 einsteckbar ist, an der Karosserie 14 fixierbar, wobei die beiden Steckbolzenaufnahmen 132 und 142 in die jeweiligen Seitenwände 82 bzw. 84 integriert sind.

In gleicher Weise ist auch das zweite Element 54 in die Seitenwand 82 integriert, vorzugsweise so, dass dieses an einer der Windstopbasis 20 zugewandten Seite der Seitenwand 82, vorzugsweise im Bereich der Innenverkleidung 88 angeordnet ist.

Um gleichzeitig Steuersignale von der Funktionssteuerung 90 auf die Steuereinheit 42 übertragen zu können, sind beim zweiten Ausführungsbeispiel im Bereich des Steckbolzens 140 und der Steckbolzenaufnahme 142 das erste Übertragungselement 102' und das zweite Übertragungselement 104' der Signalübertragungseinheit 100' vorgesehen, die vorzugsweise ebenfalls berührungslos miteinander wechselwirken.

Als Alternative zu einer induktiven Wechselwirkung zwischen dem ersten Übertragungselement 102' und dem zweiten Übertragungselement 104' ist es ebenfalls denkbar, eine optische Übertragung von Steuersignalen, beispielsweise über Infrarot, vorzusehen.

Im Übrigen funktioniert das zweite Ausführungsbeispiel in gleicher Weise wie das erste Ausführungsbeispiel, so dass hinsichtlich der Beschreibung der einzelnen Funktionen und des Zusammenwirkens insbesondere mit der Funktionssteuerung 90 vollinhaltlich auf die Ausführungen zum ersten Ausführungsbeispiel Bezug genommen werden kann.

Bei dem zweiten Ausführungsbeispiel ist es jedoch nicht zwingend notwendig, die Energieübertragungseinrichtung 50' mit dem ersten Element 52' und dem zweiten Element 54' koaxial zu den Steckbolzen 130 anzuordnen. Es ist genauso möglich, die Energieübertragungseinrichtung 50' mit dem ersten Element 52' und dem zweiten Element 54' exzentrisch zum Steckbolzen 130, beispielsweise an beliebiger Stelle eines Abdeckrahmens 150 der Abdeckung 22, anzuordnen, insoweit, als dieser parallel zu einem Element der Karosserie 14, beispielsweise einer der Seitenwände 82, 84, verläuft.

In gleicher Weise kann auch die Signalübertragungseinheit 100' mit dem ersten Übertragungselement 102' an beliebiger Stelle des Abdeckrahmens 150 angeordnet sein, insoweit, als dieser parallel zu einem Element der Karosserie 14, beispielsweise einer der Seitenwände 82, 84, verläuft, wobei dann das entsprechende zweite Übertragungselement 104 in dem jeweiligen an den Abdeckrahmen 150 angrenzenden Bereich der Karosserie, beispielsweise den Seitenwänden 82, 84, angeordnet ist.

## Patentansprüche

1. Windstopeinrichtung für Kraftfahrzeuge (12), insbesondere für Cabriofahrzeuge, umfassend eine fahrzeugfest montierbare Windstopbasis (20), an welcher ein sich in einer Windschottfläche erstreckendes Windschott (30) zwischen einer wirksamen Stellung und einer unwirksamen Stellung bewegbar gelagert ist, und eine Antriebseinrichtung (34) zum Bewegen des Windschotts (30) zwischen der unwirksamen und der wirksamen Stellung und umgekehrt, wobei der Antriebseinrichtung (34) Energie aus einem Bordnetz (44) des Kraftfahrzeugs (12) mittels einer Energieübertragungseinrichtung (50) zuführbar ist,
**dadurch gekennzeichnet, dass** die Energieübertragungseinrichtung (50) ein erstes, an der Windstopbasis (20) angeordnetes Element (52) und ein zweites, an einer Seitenwand (82, 84) der Karosserie (14) des Kraftfahrzeugs (12) angeordnetes Element (54) umfasst, die bei an dem Kraftfahrzeug (12) in Funktionsstellung montierter Windstopeinrichtung (10) Energie vom Bordnetz (44) des Kraftfahrzeugs (12) auf die an der Windstopbasis (20) angeordnete Antriebseinrichtung (34) übertragen, und dass das erste Element (52) und das zweite Element (54) in einer Fixiereinrichtung (60, 70) zum Festlegen der Windstopbasis (20) an der Karosserie (14) integriert sind.

2. Windstopeinrichtung nach Anspruch 1, **dadurch gekennzeichnet, dass** das erste Element (52) in der Windstopbasis (20) integriert angeordnet ist.

3. Windstopeinrichtung nach Anspruch 1 oder 2, **dadurch gekennzeichnet, dass** das zweite Element (54) in einer Seitenwand (82, 84) der Karosserie (14) integriert angeordnet ist.

4. Windstopeinrichtung nach einem der voranstehenden Ansprüche,
**dadurch gekennzeichnet, dass** das erste und das zweite Element (52, 54) der Energieübertragungseinrichtung (50) über sich berührende elektrische Kontaktflächen (62, 64, 72, 74) elektrische Energie übertragen.

5. Windstopeinrichtung nach Anspruch 4, **dadurch gekennzeichnet, dass** das erste und das zweite Element (52, 54) als Steckkontaktelemente (60, 70) ausgebildet sind.

6. Windstopeinrichtung nach einem der Ansprüche 1 bis 3, **dadurch gekennzeichnet, dass** das erste und das zweite Element (52', 54') der Energieübertragungseinrichtung (50') berührungslos elektrische Energie übertragen.

7. Windstopeinrichtung für Kraftfahrzeuge (12), insbesondere für Cabriofahrzeuge, umfassend eine fahrzeugfest montierbare Windstopbasis (20), an welcher ein sich in einer Windschottfläche erstreckendes Windschott (30) zwischen einer wirksamen Stellung und einer unwirksamen Stellung bewegbar gelagert ist, und eine Antriebseinrichtung (34) zum Bewegen des Windschotts (30) zwischen der unwirksamen und der wirksamen Stellung und umgekehrt, wobei der Antriebseinrichtung (34) eine Steuereinheit (42) zugeordnet ist, welche die Antriebseinrichtung (34) zum Bewegen des Windschotts (30) zwischen der unwirksamen und der wirksamen Stellung und umgekehrt ansteuert, wobei die Steuereinheit (42) mit einer fahrzeugseitigen Funktionssteuerung (90) kommuniziert, wobei eine Signalübertragungseinheit (100) vorgesehen ist, **dadurch gekennzeichnet, dass** die Signalübertragungseinheit (92) ein erstes an der Windstopbasis (20) angeordnetes Übertragungselement (102) und ein zweites an einer Seitenwand (82, 84) der Karosserie (14) angeordnetes Übertragungselement (104) umfasst, und dass das erste Übertragungselement (102) und das zweite Übertragungselement (104) in einer Fixiereinrichtung (60, 70) zum Festlegen der Windstopbasis (20) an der Karosserie (14) integriert sind.

8. Windstopeinrichtung nach Anspruch 7, **dadurch gekennzeichnet, dass** das erste Übertragungselement (102) in die Windstopbasis (20) integriert ist.

9. Windstopeinrichtung nach Anspruch 7 oder 8, **dadurch gekennzeichnet, dass** das zweite Übertragungselement (104) in die Seitenwand (82, 84) der Karosserie (14) integriert ist.

10. Windstopeinrichtung nach einem der Ansprüche 7 bis 9, **dadurch gekennzeichnet, dass** die Übertragungselemente (102, 104) über sich berührende elektrische Kontaktflächen miteinander wechselwirken.

11. Windstopeinrichtung nach einem der Ansprüche 7 bis 9, **dadurch gekennzeichnet, dass** die Übertragungselemente (102, 104) berührungslos miteinander wechselwirken.

12. Windstopeinrichtung nach Anspruch 11, **dadurch gekennzeichnet, dass** die Übertragungselemente (102, 104) induktiv miteinander wechselwirken.

13. Windstopeinrichtung nach Anspruch 12, **dadurch gekennzeichnet, dass** die Übertragungselemente (102, 104) optisch miteinander wechselwirken.

14. Windstopeinrichtung nach einem der Ansprüche 7 bis 13, **dadurch gekennzeichnet, dass** die Steuereinheit (42) mit einer tragbaren Handbedienung (120) kommuniziert.

15. Windstopeinrichtung nach Anspruch 14, **dadurch gekennzeichnet, dass** die Handbedienung (120) und die Steuereinheit (42) berührungslos kommunizieren.

16. Windstopeinrichtung nach Anspruch 14, **dadurch gekennzeichnet, dass** die Steuereinheit (42) über die fahrzeugseitige Funktionssteuerung (90) mit der Handbedienung (120) kommuniziert.

17. Windstopeinrichtung nach einem der Ansprüche 16, **dadurch gekennzeichnet, dass** die Funktionssteuerung (90) berührungslos mit der tragbaren Handbedienung (120) kommuniziert.

18. Windstopeinrichtung nach einem der Ansprüche 7 bis 17, **dadurch gekennzeichnet, dass** die Funktionssteuerung (90) über die Steuereinheit (42) ein Bewegen des Windschotts (30) von der unwirksamen Stellung in die wirksame Stellung veranlasst, wenn das Kraftfahrzeug (12) eine vorgebbare Geschwindigkeit überschreitet.

19. Windstopeinrichtung nach einem der Ansprüche 7 bis 18, **dadurch gekennzeichnet, dass** die Funktionssteuerung (90) über die Steuereinheit (42) ein Bewegen des Windschotts (30) von der unwirksamen in die wirksame Stellung veranlasst, wenn ein Verdeck (116) des Kraftfahrzeugs (12) geöffnet wird.

20. Windstopeinrichtung nach einem der Ansprüche 7 bis 19, **dadurch gekennzeichnet, dass** die Funktionssteuerung (90) über die Steuereinheit (42) ein Bewegen des Windschotts (30) von der wirksamen Stellung in die unwirksame Stellung veranlasst, wenn ein Rückwärtsgang eingelegt wird.

21. Windstopeinrichtung nach einem der Ansprüche 7 bis 20, **dadurch gekennzeichnet, dass** die Funktionssteuerung (90) über die Steuereinheit (42) ein Bewegen des Windschotts (30) von der unwirksamen Stellung in die wirksame Stellung veranlasst, wenn alle Scheiben des Kraftfahrzeugs (12) hochgefahren werden.

22. Windstopeinrichtung nach einem der Ansprüche 7 bis 21, **dadurch gekennzeichnet, dass** die Funktionssteuerung (90) über die Steuereinheit (42) ein Bewegen des Windschotts (30) zwischen einer unwirksamen und einer wirksamen Stellung oder umgekehrt veranlasst, wenn eine entsprechende Steuertaste (112) am Kraftfahrzeug (12) betätigt wird.

23. Windstopeinrichtung nach einem der Ansprüche 16 bis 22, **dadurch gekennzeichnet, dass** die einzelnen Funktionsmodi der Funktionssteuerung aktivierbar und deaktivierbar sind.

24. Cabriofahrzeug **dadurch gekennzeichnet, dass** dieses mit einer Windstopeinrichtung (10) nach einem der voranstehenden Ansprüche versehen ist.

## Claims

1. A windbreak device for motor vehicles (12), in particular for cabriolet vehicles, comprising a windbreak base (20) which can be mounted such that it is fixed to the vehicle and on which a wind deflector (30) which extends in a wind deflector area is mounted to be movable between an active position and an inactive position, and a drive device (34) for moving the wind deflector (30) between the inactive and the active position and vice versa, it being possible to supply the drive device (34) with power from an on-board electrical system (44) of the motor vehicle (12) by means of a power transmission device (50), **characterized in that** the power transmission device (50) comprises a first element (52) which is disposed on the windbreak base (20), and a second element (54) which is disposed on a side wall (82, 84) of the body (14) of the motor vehicle (12), the said elements transferring power from the on-board electrical system (44) of the motor vehicle (12) to the drive device (34) which is disposed on the windbreak base (20) when the windbreak device (10) is mounted on the motor vehicle (12) in a functional position, and **in that** the first element (52) and the second element (54) are integrated in a fixing device (60, 70) for securing the windbreak base (20) to the vehicle body (14).

2. A windbreak device according to Claim 1, **characterized in that** the first element (52) is disposed such that it is integrated in the windbreak base (20).

3. A windbreak device according to Claim 1 or 2, **characterized in that** the second element (54) is disposed such that it is integrated in a side wall (82, 84) of the vehicle body (14).

4. A windbreak device according to any of the preceding claims, **characterized in that** the first and the second elements (52, 54) of the power transmission device (50) transmit electrical power via touching electrical contact areas (62, 64, 72, 74).

5. A windbreak device according to Claim 4, **characterized in that** the first and the second elements (52, 54) are in the form of plug contact elements (60, 70).

6. A windbreak device according to any of Claims 1 to 3, **characterized in that** the first and the second elements (52', 54') of the power transmission device (50') transmit electrical power in a contact-free manner.

7. A windbreak device for motor vehicles (12), in particular for cabriolet vehicles, comprising a windbreak base (20) which can be mounted such that it is fixed to the vehicle and on which a wind deflector (30) which extends in a wind deflector area is mounted to be movable between an active position and an inactive position, and a drive device (34) for moving the wind deflector (30) between the inactive and the active position and vice versa, a control unit (42) being associated with the drive device (34), which unit actuates the drive device (34) to move the wind deflector (30) between the inactive and the active position and vice versa, the control unit (42) communicating with a function control means (90) on the vehicle, and a signal transmission unit (100) being provided, **characterized in that** the signal transmission unit (100) comprises a first transmission element (102) disposed on the windbreak base (20), and a second transmission element (104) disposed on a side wall (82, 84) of the vehicle body (14), and that the first transmission element (102) and the second transmission element (104) are integrated in a fixing device (60, 70) for securing the windbreak base (20) to the vehicle body (14).

8. A windbreak device according to Claim 7, **characterized in that** the first transmission element (102) is integrated into the windbreak base (20).

9. A windbreak device according to Claim 7 or 8, **characterized in that** the second transmission element (104) is integrated into the side wall (82, 84) of the vehicle body (14).

10. A windbreak device according to any of Claims 7 to 9, **characterized in that** the transmission elements (102, 104) interact with one another via touching electrical contact areas.

11. A windbreak device according to any of Claims 7 to 9, **characterized in that** the transmission elements (102, 104) interact with one another in a contact-free manner.

12. A windbreak device according to Claim 11, **characterized in that** the transmission elements (102, 104) interact with one another in an inductive manner.

13. A windbreak device according to Claim 12, **characterized in that** the transmission elements (102, 104) interact with one another in an optical manner.

14. A windbreak device according to any of Claims 7 to 13, **characterized in that** the control unit (42) communicates with a portable manual operator control means (120).

15. A windbreak device according to Claim 14, **characterized in that** the manual operator control means (120) and the control unit (42) communicate in a contact-free manner.

16. A windbreak device according to Claim 14, **characterized in that** the control unit (42) communicates with the manual operator control means (120) via the function control means (90) on the vehicle.

17. A windbreak device according to Claim 16, **characterized in that** the function control means (90) communicates with the portable manual operator control means (120) in a contact-free manner.

18. A windbreak device according to any of Claims 7 to 17, **characterized in that** the function control means (90) initiates a movement of the wind deflector (30) from the inactive position to the active position by means of the control unit (42) when the motor vehicle (12) exceeds a predefinable speed.

19. A windbreak device according to any of Claims 7 to 18, **characterized in that** the function control means (90) initiates a movement of the wind deflector (30) from the inactive to the active position by means of the control unit (42) when a top (116) of the motor vehicle (12) is opened.

20. A windbreak device according to any of Claims 7 to 19, **characterized in that** the function control means (90) initiates a movement of the wind deflector (30) from the active position to the inactive position by means of the control unit (42) when a reverse gear is engaged.

21. A windbreak device according to any of Claims 7 to 20, **characterized in that** the function control means (90) initiates a movement of the wind deflector (30) from the inactive position to the active position by means of the control unit (42) when all the windows of the motor vehicle (12) are raised.

22. A windbreak device according to any of Claims 7 to 21, **characterized in that** the function control means (90) initiates a movement of the wind deflector (30) between an inactive and an active position or vice versa via the control unit (42) when a corresponding control button (112) in the motor vehicle (12) is operated.

23. A windbreak device according to any of Claims 16 to 22, **characterized in that** the individual function modes of the function control means can be activated and deactivated.

24. A cabriolet vehicle, **characterized in that** it is provided with a windbreak device (10) according to any of the preceding claims.

## Revendications

1. Déflecteur d'air pour véhicules automobiles (12), en particulier pour véhicules cabriolets, comprenant une base de déflecteur (20) pouvant être montée de façon solidaire du véhicule, sur laquelle un déflecteur (30) s'étendant dans une surface de déflecteur est monté de façon à pouvoir se déplacer entre une position active et une position inactive, et un dispositif d'entraînement (34) pour le déplacement du déflecteur (30) entre la position inactive et la position active et inversement, de l'énergie provenant d'un réseau de bord (44) du véhicule (12) pouvant être amenée au dispositif d'entraînement (34) au moyen d'un dispositif de transmission d'énergie (50), **caractérisé en ce que** le dispositif de transmission d'énergie (50) comprend un premier élément (52) disposé sur la base du déflecteur (20) et un second élément (54) disposé sur une paroi latérale (82, 84) de la carrosserie (14) du véhicule (12), le premier élément et le second élément transmettant de l'énergie provenant du réseau de bord (44) du véhicule (12) au dispositif d'entraînement (34) disposé sur la base du déflecteur (20) quand le déflecteur (10) est monté en position de fonctionnement sur le véhicule (12), et **en ce que** le premier élément (52) et le second élément (54) sont intégrés dans un système de fixation (60, 70) pour la fixation de la base de déflecteur (20) sur la carrosserie (14).

2. Déflecteur selon la revendication 1, **caractérisé en ce que** le premier élément (52) est disposé de façon intégrée dans la base de déflecteur (20).

3. Déflecteur selon la revendication 1 ou 2, **caractérisé en ce que** le second élément (54) est disposé de façon intégrée dans une paroi latérale (82, 84) de la carrosserie (14).

4. Déflecteur selon l'une quelconque des revendications précédentes, **caractérisé en ce que** le premier et le second éléments (52, 54) du dispositif de transmission d'énergie (50) transmettent de l'énergie électrique au moyen de surfaces de contact (62, 64, 72, 74) électriques qui se touchent.

5. Déflecteur selon la revendication 4, **caractérisé en ce que** le premier et le second éléments (52, 54) sont conçus sous forme d'éléments de contact à fiches (60, 70).

6. Déflecteur selon l'une quelconque des revendications 1 à 3, **caractérisé en ce que** le premier et le second éléments (52', 54') transmettent de l'énergie électrique sans contact au dispositif de transmission d'énergie (50') .

7. Déflecteur pour véhicules (12), en particulier pour véhicules cabriolets, comprenant une base de déflecteur (20) pouvant être montée de façon solidaire du véhicule, sur laquelle un déflecteur (30) s'étendant dans une surface du déflecteur est monté de façon à pouvoir se déplacer entre une position active et une position inactive, et un dispositif d'entraînement (34) pour le déplacement du déflecteur (30) entre la position inactive et la position active et inversement, une unité de commande (42) étant attribuée au dispositif d'entraînement (34), laquelle unité actionne le dispositif d'entraînement (34) pour le déplacement du déflecteur (30) entre la position inactive et la position active et inversement, l'unité de commande (42) communiquant avec une commande de fonction (90) côté véhicule, une unité de transmission de signal (100) étant prévue, **caractérisé en ce que** l'unité de transmission de signal (92) comprend un premier élément de transmission (102) disposé sur la base de déflecteur (20) et un second élément de transmission (104) disposé sur une paroi latérale (82, 84) de la carrosserie (14) et **en ce que** le premier élément de transmission (102) et le second élément de transmission (104) sont intégrés dans un système de fixation (60, 70) pour la fixation de la base de déflecteur (20) sur la carrosserie (14).

8. Déflecteur selon la revendication 7, **caractérisé en ce que** le premier élément de transmission (102) est intégré dans la base de déflecteur (20).

9. Déflecteur selon la revendication 7 ou 8, **caractérisé en ce que** le second élément (104) est intégré dans la paroi latérale (82, 84) de la carrosserie (14).

10. Déflecteur selon l'une quelconque des revendications 7 à 9, **caractérisé en ce que** les éléments de transmission (102, 104) interagissent les uns avec les autres au moyen de surfaces de contact électriques qui se touchent.

11. Déflecteur selon l'une quelconque des revendications 7 à 9, **caractérisé en ce que** les éléments de transmission (102, 104) interagissent les uns avec les autres sans contact.

12. Déflecteur selon la revendication 11, **caractérisé en ce que** les éléments de transmission (102, 104) interagissent les uns avec les autres de façon inductive.

13. Déflecteur selon la revendication 12, **caractérisé en ce que** les éléments de transmission (102, 104) interagissent les uns avec les autres au plan optique.

14. Déflecteur selon l'une quelconque des revendications 7 à 13, **caractérisé en ce que** l'unité de commande (42) communique avec une commande manuelle (120) portative.

15. Déflecteur selon la revendication 14, **caractérisé en ce que** la commande manuelle (120) et l'unité de commande (42) communiquent sans contact.

16. Déflecteur selon la revendication 14, **caractérisé en ce que** l'unité de commande (42) communique avec la commande manuelle (120) au moyen de la commande de fonction (90) côté véhicule.

17. Déflecteur selon la des revendication 16, **caractérisé en ce que** la commande de fonction (90) communique sans contact avec la commande manuelle (120) portative.

18. Déflecteur selon l'une quelconque des revendications 7 à 17, **caractérisé en ce que** la commande de fonction (90) ordonne par l'unité de commande (42) un déplacement du déflecteur (30) de la position inactive à la position active lorsque le véhicule (12) dépasse une vitesse prédéfinissable.

19. Déflecteur selon l'une quelconque des revendications 7 à 18, **caractérisé en ce que** la commande de fonction (90) ordonne par l'unité de commande (42) un déplacement du déflecteur (30) de la position inactive à la position active lorsqu'une capote (116) du véhicule (12) est ouverte.

20. Déflecteur selon l'une quelconque des revendications 7 à 19, **caractérisé en ce que** la commande de fonction (90) ordonne par l'unité de commande (42) un déplacement du déflecteur (30) de la position active à la position inactive lorsqu'une marche arrière est enclenchée.

21. Déflecteur selon l'une quelconque des revendications 7 à 20, **caractérisé en ce que** la commande de fonction (90) ordonne par l'unité de commande (42) un déplacement du déflecteur (30) de la position inactive à la position active lorsque toutes les vitres du véhicule (12) sont relevées.

22. Déflecteur selon l'une quelconque des revendications 7 à 21, **caractérisé en ce que** la commande de fonction (90) ordonne par l'unité de commande (42) un déplacement du déflecteur (30) entre une position inactive et une positive active ou inversement lorsqu'une touche de commande (112) correspondante est actionnée sur le véhicule (12).

23. Déflecteur selon l'une quelconque des revendications 16 à 22, **caractérisé en ce que** les modes de fonction individuels de la commande de fonction sont activables et désactivables.

24. Véhicule cabriolet **caractérisé en ce que** celui-ci est doté d'un déflecteur (10) selon l'une quelconque des revendications précédentes.
